# EUROPEAN PATENT APPLICATION

(11) **EP 4 807 511 A1**
(43) Date of publication of application: **16.09.2026**
(21) Application number: 24900810.3
(22) Date of filing: 02.10.2024
(51) Int. Cl.: G06F 3/0484, G06F 3/0481

(54) **ELECTRONIC DEVICE AND METHOD FOR STORING INFORMATION**

(30) Priority: 08.12.2023 KR 20230177819; 30.01.2024 KR 20240013926
(71) Applicant: Samsung Electronics Co., Ltd., Suwon-si, Gyeonggi-do 16677 (KR)
(72) Inventor: JEONG, Jaeyoun, Suwon-si, Gyeonggi-do 16677 (KR); KIM, Munhwi, Suwon-si, Gyeonggi-do 16677 (KR); SONG, Taeyang, Suwon-si, Gyeonggi-do 16677 (KR); AN, Jinwan, Suwon-si, Gyeonggi-do 16677 (KR); LEE, Chaekyung, Suwon-si, Gyeonggi-do 16677 (KR)
(74) Representative: Nederlandsch Octrooibureau
(86) International application number: PCT/KR2024/015009
(87) International publication number: WO 2025/121622

(57) **Abstract**

Provided are an electronic device, a method, and a storage medium for storing information. The electronic device comprises: a rollable display which is inserted or withdrawn; a processor; and a memory for storing an instruction executed by the processor. The instruction stored in the memory instructs the electronic device to display an information receiving box including at least one piece of information on a rollable display withdrawn to have a size greater than or equal to a first size and less than a second size. When a preset user input is received on first information among the at least one piece of information, the instruction instructs the electronic device to delete the first information from the information receiving box and store the first information in an information storage box. The instruction instructs the electronic device to display the information storage box including the first information when the rollable display is withdrawn to have a size greater than or equal to the second size.

## Description

### [Technical Field]

Embodiments of the disclosure relate to an electronic device and a method, and for example, to an electronic device and a method for storing information.

### [Background Art]

Electronic devices may store and display various types of information. For example, various types of information may include notifications, messages, files, text, images, and/or contents. The electronic devices may display various types of information in a list in the order in which they were generated. The electronic devices may delete the selected information from the list or display detailed information about the selected information, according to the user's selection.

The above-described information may be provided as a related art to help understanding of the disclosure. No claim or determination is made as to the applicability of any of the foregoing as prior art to the disclosure.

### [Disclosure of Invention]

### [Technical Problem]

The electronic device and control method of the disclosure may provide a device and method for separately storing and managing information selected by a user among various pieces of information.

### [Solution to Problem]

An electronic device according to various embodiments of the disclosure may include a rollable display that is inserted into or taken out of the electronic device, a processor, and a memory storing instructions executable by the processor. The instruction stored in the memory causes the electronic device to perform an operation of displaying an information reception box including at least one piece of information on the rollable display taken out to have a size greater than or equal to a first size and less than a second size. The instruction may cause the electronic device to perform, in case that a preconfigured user input is received on first information among the at least one piece of information, an operation of deleting the first information from the information reception box and store the first information in an information storage box. The instruction may cause the electronic device to perform, in case that the rollable display is taken out to have a size greater than or equal to the second size, an operation of displaying an information storage box including the first information.

According to various embodiments of the disclosure, a method for storing information of an electronic device including a rollable display that is inserted into or taken out of the electronic device may include an operation of displaying an information reception box including at least one piece of information on the rollable display taken out to have a size greater than or equal to a first size and less than a second size. The method may include an operation of, in case that a preconfigured user input is received on first information among the at least one piece of information, deleting the first information from the information reception box and storing the first information in an information storage box. The method may include an operation of, in case that the rollable display is taken out to have a size greater than or equal to the second size, displaying an information storage box including the first information.

According to various embodiments of the disclosure, a non-transitory computer-readable storage medium recording a program for performing a method for storing information of an electronic device including a rollable display that is inserted into or taken out of the electronic device may perform an operation of displaying an information reception box including at least one piece of information on the rollable display taken out to have a size greater than or equal to a first size and less than a second size. The storage medium may perform an operation of, in case that a preconfigured user input is received on first information among the at least one piece of information, deleting the first information from the information reception box and storing the first information in an information storage box. The storage medium may include an operation of, in case that the rollable display is taken out to have a size greater than or equal to the second size, displaying an information storage box including the first information.

### [Advantageous Effects of Invention]

Various embodiments of the disclosure may allow information selected by the user to be separately stored and managed. Various embodiments of the disclosure may allow easy access to an information box in which selected information is stored.

The effects of the disclosure are not limited to those mentioned above, and other effects not mentioned may be clearly understood from the following description by those skilled in the art.

### [Brief Description of Drawings]

FIG. 1 is a block diagram illustrating an electronic device in a network environment according to various embodiments.
FIGS. 2A, 2B, and 2C are diagrams illustrating an electronic device including a rollable display according to various embodiments.
FIG. 3 is a block diagram illustrating a configuration of an electronic device according to various embodiments.
FIG. 4 is a flowchart illustrating a process for processing information included in an information reception box, based on a user input according to various embodiments.
FIGS. 5A, 5B, 5C, 5D, 5E, 5F, and 5G are diagrams illustrating a process for displaying and processing stored information according to display areas of a rollable display according to various embodiments.
FIG. 6A, 6B, 6C, 6D, 6E, 6F, 6G, 6H, and 6I are diagrams illustrating a process for displaying and processing stored information according to a user input according to various embodiments.
FIGS. 7A, 7B, 7C, 7D, 7E, 7F, and 7G are diagrams illustrating a method for displaying and processing stored information according to display areas of a rollable display and a user input according to various embodiments.
FIG. 8A, 8B, 8C, and 8D are diagrams illustrating an information reception box including various pieces of information according to various embodiments.
FIG. 9A, 9B, and 9C are diagrams illustrating a process for storing different types of information in an information storage box according to various embodiments.
FIG. 10 is a flowchart illustrating a method for storing information according to various embodiments.

### [Mode for the Invention]

Hereinafter, an embodiment of the disclosure will be described with reference to accompanying drawings so as to be easily realized by a person having an ordinary knowledge in the art to which the disclosure pertains. However, the disclosure may be realized in many different forms and should not be construed as being limited to the embodiments disclosed herein. In connection with a description of the drawings, like or similar reference numerals may be used for like or similar elements. Furthermore, in the drawings and descriptions related thereto, descriptions of well-known functions and configurations may be omitted for clarity and brevity.

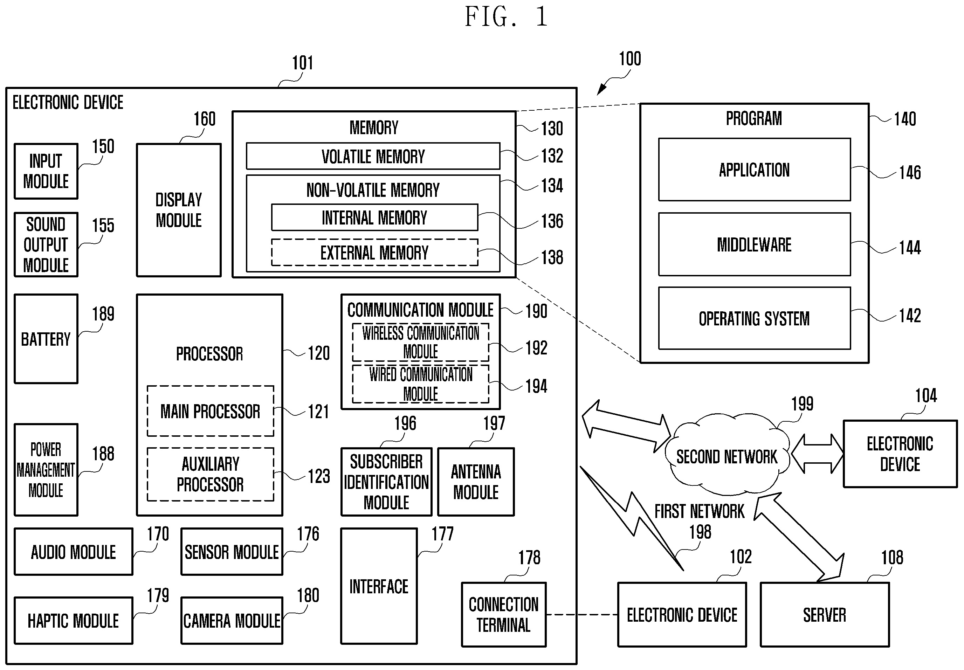

FIG. 1 is a block diagram illustrating an electronic device 101 in a network environment 100 according to various examples. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an example, the electronic device 101 may communicate with the electronic device 104 via the server 108. According to an example, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some examples, at least one of the components (e.g., the connection terminal 178) may be omitted from the electronic device 101, or one or more other components may be added in the electronic device 101. In some examples, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one example, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an example, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an example, the auxiliary processor 123 (e.g., an image signal processor or a communication processor) may be implemented as part of another component (e.g., the camera module 180 or the communication module 190) functionally related to the auxiliary processor 123. According to an example, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an example, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an example, the display module 160 may include a touch sensor adapted to detect a touch, or a pressure sensor adapted to measure the intensity of force incurred by the touch.

The audio module 170 may convert a sound into an electrical signal and vice versa. According to an example, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an example, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an example, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an example, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an example, the haptic module 179 may include, for example, a motor, a piezoelectric element, or an electric stimulator.

The camera module 180 may capture a still image or moving images. According to an example, the camera module 180 may include one or more lenses, image sensors, image signal processors, or flashes.

The power management module 188 may manage power supplied to the electronic device 101. According to one example, the power management module 188 may be implemented as at least part of, for example, a power management integrated circuit (PMIC).

The battery 189 may supply power to at least one component of the electronic device 101. According to an example, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an example, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an example, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an example, the antenna module 197 may include an antenna including a radiating element composed of a conductive material or a conductive pattern formed in or on a substrate (e.g., a printed circuit board (PCB)). According to an example, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an example, another component (e.g., a radio frequency integrated circuit (RFIC)) other than the radiating element may be additionally formed as part of the antenna module 197.

According to various examples, the antenna module 197 may form an mmWave antenna module. According to an example, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an example, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an example, the external electronic device 104 may include an internet-of-things (IoT) device. The server 108 may be an intelligent server using machine learning and/or a neural network. According to an example, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various examples may be one of various types of electronic devices. The electronic devices may include, for example, a portable communication device (e.g., a smartphone), a computer device, a portable multimedia device, a portable medical device, a camera, a wearable device, or a home appliance. According to an example of the disclosure, the electronic devices are not limited to those described above.

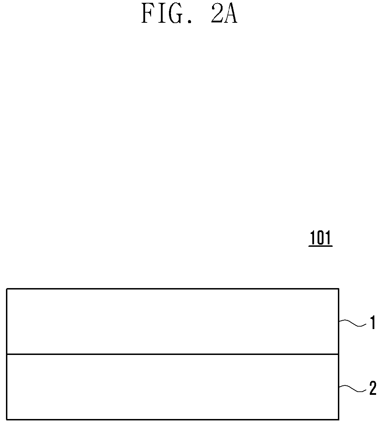

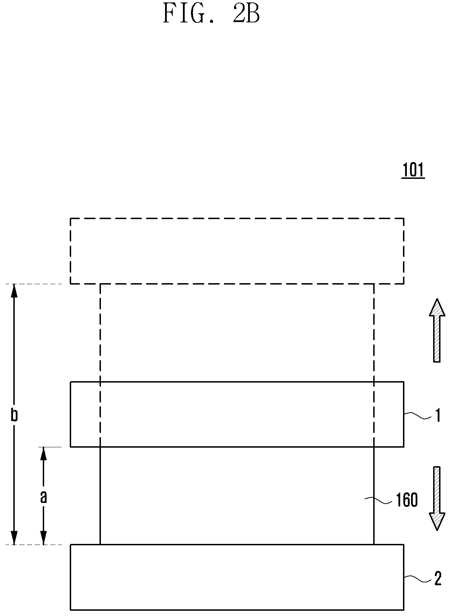

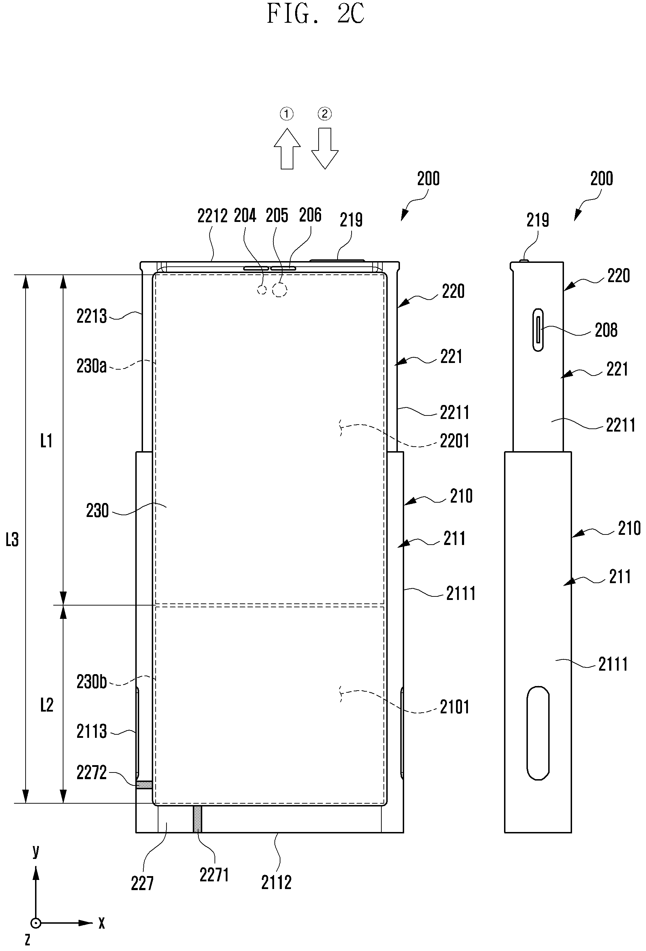

FIGS. 2A, 2B, and 2C are diagrams illustrating an electronic device including a rollable display according to various embodiments.

Referring to FIG. 2A, the electronic device 101 may include a rollable display 160, an upper housing 1, and a lower housing 2. One end of the rollable display 160 (e.g., the display module 160 in FIG. 1) may include one end connected to the upper housing 1, and the other end connected to the lower housing 2. The flexible characteristics of the rollable display 160 may allow the rollable display 160 to be rolled. For example, when the upper housing 1 and the lower housing 2 are close to each other, the rollable display 160 may be rolled and inserted into the upper housing 1 and/or the lower housing 2 (roll-in). As shown in FIG. 2A, when the upper housing 1 and the lower housing 2 are closed to each other, the rollable display 160 may be completely inserted into the electronic device 101 and thus may not be visible from the outside.

Referring to FIG. 2B, as the upper housing 1 and/or the lower housing 2 are spaced apart, the rollable display 160 may be taken out to the outside (roll-out). Depending on the distance between the upper housing 1 and the lower housing 3, the size of the rollable display may change, and a display area for displaying data may be expanded or reduced. For example, when the upper housing 1 and the lower housing 2 are spaced a distance a away from each other, the display area may have a first size. In case that the upper housing 1 and the lower housing 2 are spaced apart farther than the distance a, a portion of the rollable display 160, which has been inserted into the electronic device 101, may be taken out further. In case that the upper housing 1 and the lower housing 2 are spaced away from each other by a distance b greater than the distance a, the display area may have a second size greater than the first size. If the upper housing 1 and the lower housing 2 are brought closer than the distance b, a rolled-out portion of the rollable display 160 may be inserted into the electronic device 101.

FIG. 2C shows an electronic device having a rollable display in a slide-out state according to an embodiment.

Referring to FIG. 2C, an electronic device 200 (e.g., the electronic device 101 in FIG. 1) may include a first housing 210, a second housing 220 slidably coupled to the first housing 210 in a specified direction (e.g., direction ① or ②) (e.g., the ±y-axis direction), and a rollable display 230 (e.g., a flexible display, expandable display, or stretchable display) (e.g., the display module 160 in FIG. 1) disposed to be supported by at least a portion of the first housing 210 and the second housing 220. In an embodiment, the second housing 220 may be slidably coupled to the first housing 210 to be moved in a first direction (direction ①) with respect to the first housing 210 or moved in a second direction (direction ②), which is opposite to the first direction. In an embodiment, the electronic device 200 may be changed to a slide-in state (e.g., an inserted state) in which at least a portion of the second housing 220 is received in at least a portion of a first space 2101 defined by the first housing 210. In an embodiment, the electronic device 200 may be changed to a slide-out state (e.g., an extended state) by at least a portion of the second housing 220 moving in the outward direction (e.g., direction ①) from the first space 2101. In an embodiment, the electronic device 200 may include a support member (e.g., a bendable member, a bendable support member, a multi-joint hinge module, or a multi-bar assembly) that, in a slide-out state, defines at least a portion of the same plane with at least a portion of the second housing 220, and, in a slide-in state, is received into the first space 2101 of the first housing 210 in a bending manner. In an embodiment, at least a portion of the rollable display 230 may be disposed to be attached to at least a portion of the second housing 220. In an embodiment, at least a portion of the remaining part of the rollable display 230 may be attached to the support member. In an embodiment, at least a portion of the rollable display 230 may be disposed to be not visible from the outside by being received in the first space 2101 of the first housing 210 in a bending manner while being supported by the support member in the slide-in state. In an embodiment, at least a portion of the rollable display 230 may be disposed to be visible from the outside while being supported by a support member which defines at least a portion of the same plane with the second housing 220.

According to various embodiments, the electronic device 200 may include the first housing 210 including a first lateral member 211 and the second housing 220 including a second lateral member 221. According to an embodiment, the first lateral member 211 may include a first lateral surface 2111 having a first length along a first direction (e.g., the y-axis direction), a second lateral surface 2112 extending to have a second length longer than the first length along a direction (e.g., the x-axis direction) substantially perpendicular to the first lateral surface 2111, and a third lateral surface 2113 extending from the second lateral surface 2112 to be substantially perpendicular to the first lateral surface 2111 and having the first length. In an embodiment, the first lateral member 211 may be at least partially made of a conductive member (e.g., a metal). In some embodiments, the first lateral member 211 may be made of a combination of a conductive member and a non-conductive member (e.g., polymer). In an embodiment, the first housing 210 may include a first extension member 212 extending from at least a portion of the first lateral member 211 to at least a portion of the first space 2101. In an an embodiment, the first extension member 1 may be formed integrally with the first lateral member 211. In some embodiments, the first extension member may be formed separately from the first lateral member 211 and may be structurally coupled to the first lateral member 211.

According to various embodiment, the second lateral member 221 may include a fourth lateral surface 2211 at least partially corresponding to the first lateral surface 2111 and having a third length, a fifth lateral surface 2212 extending from the fourth lateral surface 2211 in a direction substantially parallel to the second lateral surface 2112 and having a fourth length greater than the third length, and a sixth lateral surface 2213 extending from the fifth lateral surface 2212 to correspond to the third lateral surface 2113 and having the third length. In an embodiment, the second lateral member 221 may be at least partially made of a conductive member (e.g., a metal). In some embodiments, the second lateral member 221 may be made of a combination of a conductive member and a non-conductive member (e.g., polymer). In an embodiment, at least a portion of the second lateral member 221 may include a second extension member 222 extending to at least a portion of the second space 2201 of the second housing 220. In an an embodiment, the second extension member may be formed integrally with the second lateral member 221. In some embodiments, the second extension member may be formed separately from the second lateral member 221 and may be structurally coupled to the second lateral member 221.

According to various embodiments, the first lateral surface 2111 and the fourth lateral surface 2211 may be slidably coupled to each other. In an embodiment, the third lateral surface 2113 and the sixth lateral surface 2213 may be slidably coupled to each other. According to an embodiment, in the slide-in state, the fourth lateral surface 2211 may be disposed to be substantially invisible from the outside by overlapping the first side 2111. According to an embodiment, in the slide-in state, the sixth lateral surface 2213 may be disposed to be substantially invisible from the outside by overlapping the third side 2113. In some embodiments, at least a portion of the fourth lateral surface 2211 and the sixth lateral surface 2213 may be disposed to be at least partially visible from the outside in the slide-in state. In an embodiment, in the slide-in state, the second extension member may be disposed to be substantially invisible from the outside by overlapping the first extension member. In some embodiments, in the slide-in state, the second extension member may be disposed to be at least partially visible from the outside.

According to various embodiments, the first housing 210 may include a first rear cover coupled to at least a portion of the first lateral member 211. In an embodiment, the first rear cover may be disposed to be coupled to at least a portion of the first extension member. In some embodiments, the first rear cover may be formed integrally with the first lateral member 211. In an embodiment, the first rear cover may be formed by a polymer, coated or colored glass, ceramic, metal (e.g., aluminum, stainless steel (STS), or magnesium), or a combination of at least two of these materials. In some embodiments, the first rear cover may extend to at least a portion of the first lateral member 211. In some embodiments, the first rear cover may be omitted, and at least a portion of the first extension member may be used as the first rear cover.

According to various embodiments, the second housing 220 may include a second rear cover coupled to at least a portion of the second lateral member 221. In an embodiment, the second rear cover 223 may be disposed to be coupled to at least a portion of the second extension member. In some embodiments, the second rear cover may be formed integrally with the second lateral member 221. In an embodiment, the second rear cover may be formed by a polymer, coated or colored glass, ceramic, metal (e.g., aluminum, stainless steel (STS), or magnesium), or a combination of at least two of these materials. In some embodiments, the second rear cover may extend to at least a portion of the second lateral member 221. In some embodiments, the second rear cover may be omitted, and at least a portion of the second extension member may be used as the second rear cover 223.

According to various embodiments, the rollable display 230 may include a first part 230a (e.g., a flat part) that is always visible from the outside and a second part 230b (e.g., a bendable part or a bending part) extending from the first part 230a and received in the first space 2101 of the first housing 210 in a bent manner so as to be invisible from the outside in the slide-in state. In an embodiment, the first part 230a may be disposed to be supported by the second housing 220, and the second part 230b may be disposed to be at least partially supported by the support member. In an embodiment, the second part 230b of the rollable display 230 may be disposed to form substantially the same plane as the first part 230a while being supported by the support member in a state where the second housing 220 is slid out along the first direction (direction ①), so as to be visible from the outside. In an embodiment, the second part 230b of the rollable display 230 may be received in the first space 2101 of the first housing 210 in a bent manner in a state where the second housing 220 is slid-in along the second direction (direction ②), and may be disposed to be invisible from the outside. Therefore, the display area of the rollable display 230 may be variable as the second housing 220 slides in a specified direction (e.g., the ±y-axis direction) from the first housing 210.

According to various embodiments, the length of the rollable display 230 in the first direction (direction ①) may vary according to the sliding movement of the second housing 220, which moves with reference to the first housing 210. For example, in the slide-in state, the rollable display 230 may have a first display area (e.g., an area corresponding to the first part 230a) corresponding to a first length L1. In an embodiment, in the slide-out state, the rollable display 230 may extend to have a second display area (e.g., an area including the first part 230a and the second part 230b) corresponding to a third length L3 longer than the first length L1 and larger than the first display area, according to the sliding movement of the second housing 220 moved additionally by a second length L2 with reference to the first housing 210 in a slide-out state.

According to various embodiments, the electronic device 200 may include at least one of an audio output device (e.g., a call receiver 206 and/or a speaker), a camera module (e.g., the first camera module 205 or the second camera module 207), a connector port 208, a key input device 219, or an indicator (not shown). In some embodiments, the electronic device 200 may be configured to omit at least one of the above-described components or additionally include other components. In some embodiments, at least one of the above-described elements may be disposed in the first space 2101 of the first housing 210.

The audio output device may include, for example, a call receiver 206 and a speaker. In an embodiment, the speaker may externally correspond to the outside through at least one speaker hole formed in the second housing 220 at a location (e.g., the fifth side 2212) that is always exposed to the outside, regardless of the slide-in/slide-out state. In an embodiment, the connector port 208 may correspond to the outside through a connector port hole formed in the second housing 220 in the slide-out state. In some embodiments, in the slide-in state, the connector port 208 may be formed in the first housing 210 and may correspond to the outside through an opening formed to correspond to the connector port hole. In some embodiments, the call receiver 206 may include a speaker (e.g., a piezo speaker) operating without a separate speaker hole. According to various embodiments, the camera module may include a first camera module 205 disposed on the front surface of the electronic device 200 and a second camera module 316 disposed on the rear surface of the electronic device 200.

According to various embodiments, the electronic device 200 may have a structure in which the second housing 220 slides in and/or out along the longitudinal direction (e.g., vertical direction) (e.g., the ±y-axis direction) of the electronic device 200, with reference to the first housing 210, but is not limited thereto. For example, the electronic device 200 may have a structure in which the second housing 220 slides in and/or slides out with reference to the first housing 210 in a width direction (e.g., a horizontal direction) (e.g., in the ±x-axis direction) that is perpendicular to the longitudinal direction of the electronic device 200. In some embodiments, the electronic device 200 may be configured such that the length of the second lateral surface 2112 of the first housing 210 is longer than the length of the first lateral surface 2111. In this case, the length of the fifth lateral surface 2212 of the second housing 220 may also be formed to be longer than the length of the fourth lateral surface 2211.

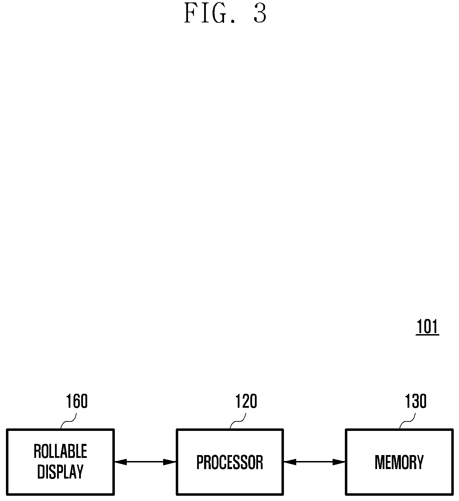

FIG. 3 is a block diagram illustrating a configuration of an electronic device according to various embodiments.

Referring to FIG. 3, the electronic device 101 may include a rollable display 160, a processor 120 (e.g., the processor 120 in FIG. 1), and a memory 130.

The rollable display 160 may be connected to the upper housing 1 and the lower housing 2 of the electronic device 101 and may be inserted into or taken out of the electronic device 101 according to the movement of the upper housing 1 and/or the lower housing 2.

The memory 130 (e.g., the memory 130 in FIG. 1) may store data, algorithms, programs, or instructions for performing functions of the electronic device 101 (e.g., the electronic device 101 in FIG. 1). The instructions stored in the memory 130 may be loaded into the processor 120 and executed.

The processor 120 may control each component of the electronic device 101. The electronic device 101 may include one or more processors 120. For example, the processor 120 may correspond to multiple processors that collectively perform multiple functions by dividing the functions among the processors.

The rollable display 160 may be slid out to have a size equal to or larger than the first size and smaller than the second size. For example, the first size may be a preconfigured size, and the second size may be a size larger than the first size. As an example, the second size may include a size in which the rollable display 160 is taken out to its maximum. The processor 120 may display an information reception box including at least one piece of information on the rollable display 160. For example, the information may include a notification, an indicator, a message, a file, text, an image, and/or a content. The information reception box may be an area for storing generated (or received) information or a user interface (UI) for displaying same. The information reception box may be generated for each type of information. For example, a notification information reception box may be an area for storing (or a UI for displaying) notification information received from the outside and/or notification information generated inside the electronic device 101.

The processor 120 may receive a user input on information included in the information reception box, and perform an operation corresponding to the received user input. As an example, when a user input (e.g., flick or swipe to the right) for moving information on first information included in the information reception box is received, the processor 120 may move (or store) the first information to the information storage box and delete same from the information reception box. For example, the information storage box may be configured as a separate storage space and/or a separate area from the information reception box in the memory 130. As an example, the information storage box may be included in the information reception box and may be configured as the storage space of the information reception box of the memory 130 and/or a specific area of the information reception box. When a user input (e.g., flick or swipe to the left) for deleting information on second information included in the information reception box is received, the processor 120 may delete the second information from the information reception box. If a user input (e.g., tap or press) for selecting information on third information included in the information reception box is received, the processor 120 may execute an application related to the third information and display data related to the third information.

The rollable display 160 taken out to the first size may be further taken out. As the rollable display 160 is further taken out, the display area may expand from a first size to a second size. When the rollable display 160 is further taken out (or the display area is expanded from the first size to the second size), the processor 120 may display an information storage box. For example, the information storage box may be an area or a UI that stores or displays information that has been moved from the information reception box. There may be one information storage box, and the information storage box may store selected information regardless of the type of information. For example, the processor 120 may allocate a portion of the memory 130 to store the information included in the information reception box, and allocate a different area separate from the portion to store the information included in the information storage box. As an example, when the rollable display 160 is taken out to have a size greater than or equal to the second size, the processor 120 may switch (or change) the screen displaying the information reception box to a screen displaying the information storage box. As another example, the processor 120, when the rollable display is taken out to have a size greater than or equal to the second size, may display the information storage box along with the information reception box. For example, the information storage box may be displayed in an area corresponding to a second part (e.g., the first part 230a of the rollable display 230 in FIG. 2C) of the rollable display 160, and the area of the information storage box may be expanded or reduced in proportion to the rolled-out length of the rollable display 160 (e.g., the first length L1 of FIG. 2C).

In the above-described example, since the first information has been moved to the information storage box, the first information may be included in the displayed information storage box. The processor 120 may receive a user input on the first information included in the information storage box, and perform an operation corresponding to the received user input. As an example, when a user input (e.g., flick or swipe to the right) for moving information on the first information included in the information storage box is received, the processor 120 may move (or store) the first information to the information reception box and delete same from the information storage box. When a user input (e.g., flick or swipe to the left) for deleting information on the second information included in the information storage box is received, the processor 120 may delete the second information from the information storage box. If a user input (e.g., tap or press) for selecting information on the first information included in the information storage box is received, the processor 120 may execute an application related to the first information and display data related to the first information.

In case that the screen on which the information reception box is displayed is switched to the screen on which the information storage box is displayed, the processor 120 may receive new information. Since only the information storage box is displayed in the display area, the processor 120 may display the received information together with the first information in the information storage box. When the rollable display 160, which has been taken out to have a size equal to or larger than the second size, is inserted to have a size equal to or larger than the first size and smaller than the second size, the processor 120 may switch the screen on which the information storage box is displayed to the screen on which the information reception box is displayed. When the screen on which the information storage box is displayed is switched to the screen on which the information reception box is displayed, if the newly received information displayed in the information storage box is in an unidentified state, the processor 120 may delete the newly received information from the information storage box and move same to the information reception box.

As an example, when a user input for switching to a home screen (e.g., flick or swipe in the upward direction) is received while the information storage box and/or the information reception box is displayed, the processor 120 may switch the currently displayed screen to the home screen. While the home screen is displayed, if a user input (e.g., single-touch flick or swipe in the downward direction) for displaying the information reception box is received, the processor 120 may display the information reception box. While the home screen is displayed, if a user input (e.g., two-touch flick or swipe in the downward direction) for displaying the information storage box is received, the processor 120 may display the information storage box.

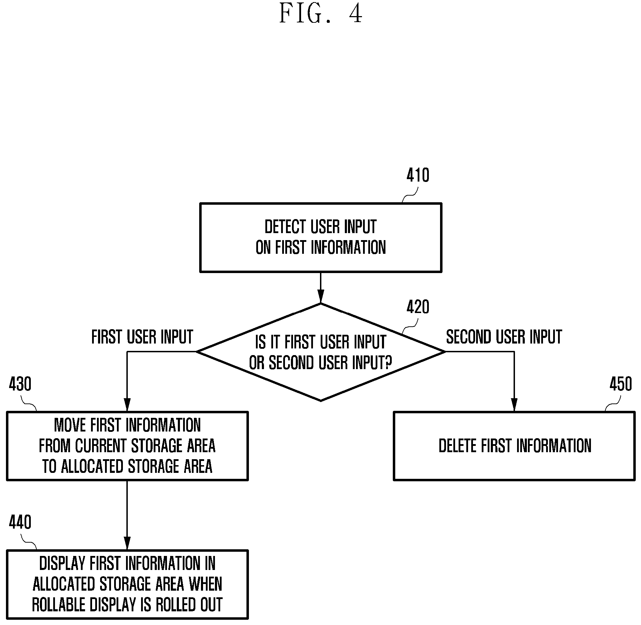

FIG. 4 is a flowchart illustrating a process for processing information included in an information reception box, based on a user input according to various embodiments.

In the following embodiment, respective operations may be sequentially performed, but are not necessarily sequentially performed. For example, the sequential position of each operation may be changed, or at least two operations may be performed in parallel.

According to an embodiment, it may be understood that operations 410 to 450 are performed by a processor (e.g., the processor 120 in FIG. 3) of the electronic device (e.g., the electronic device 101 in FIG. 3).

Referring to FIG. 4, the electronic device 101 may detect a user input on the first information (410), and may determine whether the detected user input is a first user input or a second user input (420). For example, the first user input or the second user input is an expression for distinguishing user inputs and is not limited to other aspects of the user inputs (e.g., importance or order). For example, the rollable display 160 may be in a state where it is taken out to have a size greater than or equal to the first size. The first user input may include a flick (or swipe) gesture in the right direction, and the second user input may include a flick (or swipe) gesture in the left direction.

If the identified user input is the first user input, the electronic device 101 may move the first information from a current storage area to a separately allocated storage area (430). For example, the current storage area may be an area for storing information included in the information reception box, and the separately allocated storage area may be an area for storing information included in the information storage box.

When the rollable display 160 is rolled out, the electronic device 101 may display the first information in the separately allocated storage area (440). For example, the rollable display 160 taken out to the first size may be further taken out to have the second size that is greater than the first size. As an example, when the rollable display 160 is taken out to have a size greater than or equal to the second size, the electronic device 101 may switch a screen on which the information reception box is displayed to a screen on which the information storage box is displayed. As another example, when the rollable display 160 is taken out to have a size greater than or equal to the second size, the electronic device 101 may display the information storage box together with the information reception box.

If the identified user input is the second user input, the electronic device 101 may delete the first information (450). The electronic device 101 may remove the first information from the current storage area.

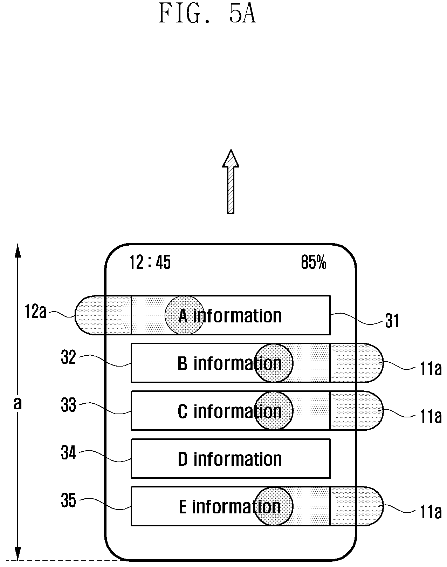

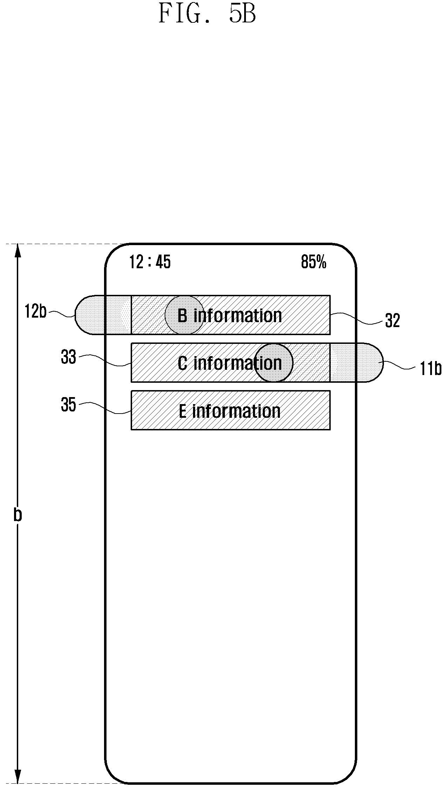

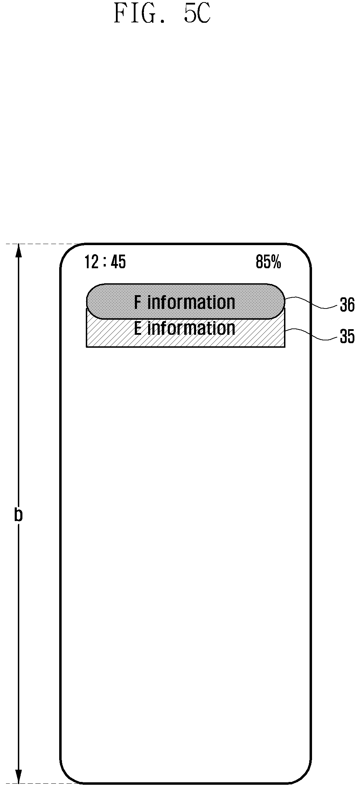

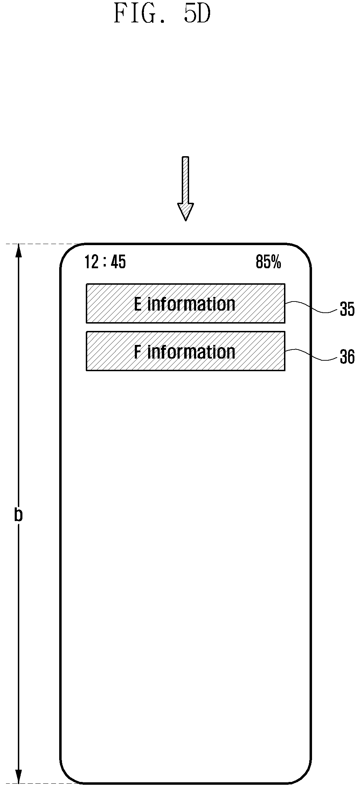

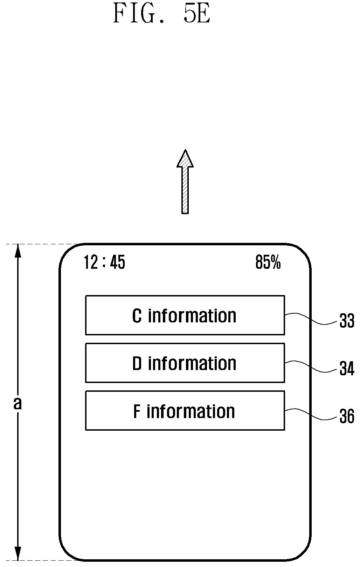

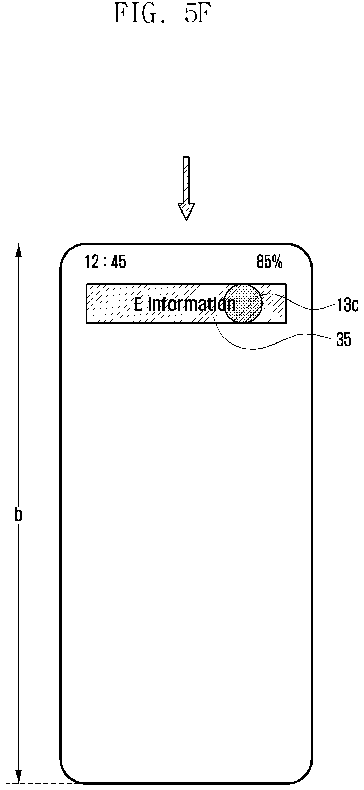

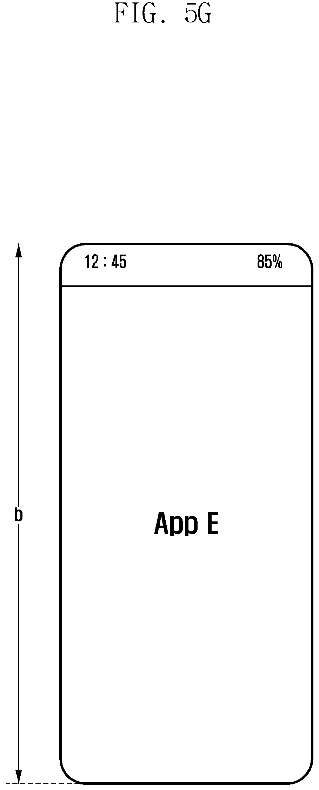

FIGS. 5A, 5B, 5C, 5D, 5E, 5F, and 5G are diagrams illustrating a process for displaying and processing stored information according to display areas of a rollable display according to various embodiments.

Referring to FIG. 5A, an electronic device 101 having an information reception box displayed thereon is illustrated. The rollable display 160 may be taken out to size a. Size a may be a size that is greater than or equal to the first size and less than the second size. The electronic device 101 may display the information reception box on the rollable display 160. As an example, the information reception box may include A information 31, B information 32, C information 33, D information 34, and E information 35. The electronic device 101 may receive a user input on information included in the information reception box, and perform an operation corresponding to the received user input.

For example, the electronic device 101 may sequentially receive a first user input 11a on B information 32, C information 33, and E information 35. For example, the first user input 11a may include a flick (or swipe) gesture in the right direction. The electronic device 101 may move the B information 32, C information 33, and E information 35 to the information storage box and delete them from the information reception box in response to the first user input 11a. The electronic device 101 may receive a second user input 12a on the A information 31. As an example, the second user input 12a may include a flick (or swipe) gesture in the left direction. The electronic device 101 may delete the A information 31 from the information reception box in response to the second user input 12a. The rollable display 160 may be further taken out.

Referring to FIG. 5B, an electronic device 101 with an information storage box displayed thereon is illustrated. The rollable display 160, which is taken out to size a, may be further taken out to size b. For example, size b may be a size greater than or equal to the second size. When the rollable display 160 is taken out to size b, the electronic device 101 may switch the screen on which the information reception box is displayed to a screen on which the information storage box is displayed. As described in FIG. 5A, the B information 32, the C information 33, and the E information 35 may be moved from the information reception box to the information storage box. Therefore, the electronic device 101 may display the information storage box including the B information 32, the C information 33, and the E information 35 on the rollable display 160. The electronic device 101 may receive a user input on information included in the information storage box, and perform an operation corresponding to the received user input.

For example, the electronic device 101 may receive the first user input 11b on the C information 33. For example, the first user input 11b may include a flick (or swipe) gesture in the left direction. The electronic device 101 may move the C information 33 to the information reception box in response to the first user input 11b and may delete same from the information storage box. The electronic device 101 may receive the second user input 12b on the B information 32. As an example, the second user input 12b may include a flick (or swipe) gesture in the left direction. The electronic device 101 may delete the B information 32 from the information storage box in response to the second user input 12b.

Referring to FIG. 5C, the electronic device 101 receiving new information is illustrated. In the state where the electronic device 101 is displaying the information storage box, new information may be received. As described with reference to FIG. 5B, the C information 33 included in the information storage box may be moved to the information reception box, and the B information 32 may be deleted from the information storage box. The information storage box may include the E information 35. For example, the electronic device 101 may receive the F information 36 in a state where the information storage box is displayed. The electronic device 101 may display the newly received F information 36 as a pop-up.

Referring to FIG. 5D, an electronic device 101 on which an information storage box including new information is displayed is illustrated. The electronic device 101 may display new information in the information storage box. As an example, the electronic device 101 may display the newly received F information 36 below the E information 35. A portion of the rollable display 160 may be inserted.

Referring to FIG. 5E, an electronic device 101 on which a message reception icon is displayed is illustrated. The rollable display 160 taken out to size b may be inserted to have size a. When the rollable display 160, which has been taken out to size b, is inserted to have size a, the electronic device 101 may switch the screen on which the information storage box is displayed to a screen on which the information reception box is displayed. As described above, the A information 31 may be deleted from the information reception box. The B information 32 and the E information 35 may be moved to the information storage box. The C information 33 may be moved to the information storage box and then moved back to the information reception box. The D information 34 may remain in the information reception box. As an example, in case that the received F information 36 is in an unidentified state in a state where the information storage box is displayed, the electronic device 101 may move the unidentified F information 36 to the information reception box when switching to an information reception box screen. As illustrated in FIG. 5E, the electronic device 101 may display the information reception box including the C information 33, the D information 34, and the F information 36. The rollable display 160 may be taken out again.

Referring to FIG. 5F, an electronic device 101 on which an information storage box is displayed is illustrated. When the rollable display 160 is taken out to size b, the electronic device 101 may switch the screen on which the information reception box is displayed to a screen on which the information storage box is displayed. As described with reference to FIG. 5D, the information storage area may include the E information 35 and the F information 36, and the unidentified F information 36 may be moved to the information reception box according to the rolling-in of the rollable display 160. As illustrated in FIG. 5F, the electronic device 101 may display an information storage box including the E information 35. As an example, the electronic device 101 may receive a third user input 13c on the E information 35. As an example, the third user input 13c may include a tap (or press) gesture for selecting the E information 35. For example, the third user input is an expression for distinguishing user inputs and is not limited to other aspects of the user inputs (e.g., importance or order).

Referring to FIG. 5G, an electronic device 101 executing a function related to the selected information is illustrated. For example, when the E information 35 is selected, the electronic device 101 may execute an application related to the E information 35 and display (or perform a function of) data related to the E information 35 in the executed application.

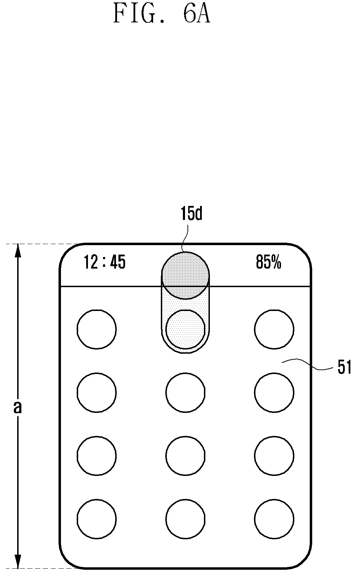

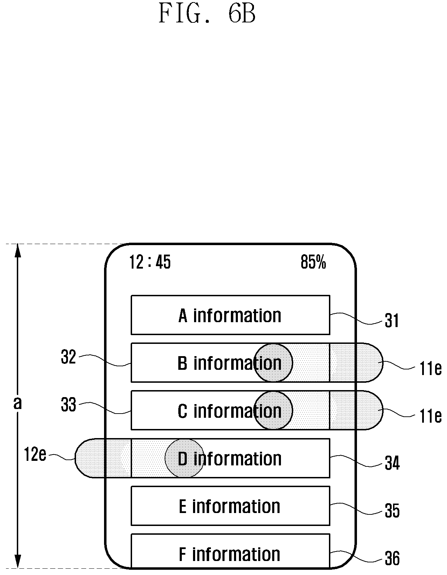

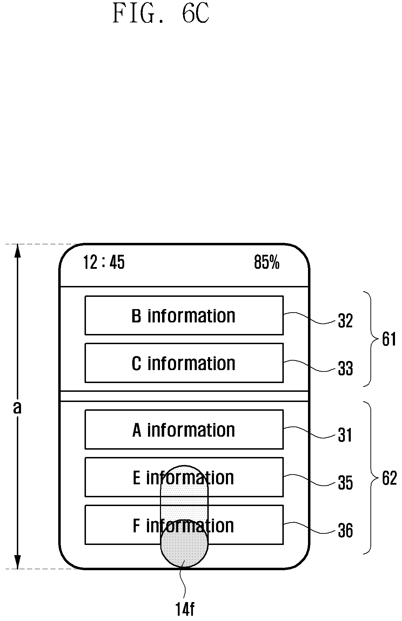

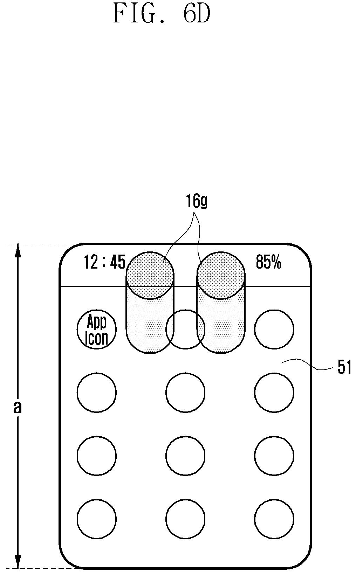

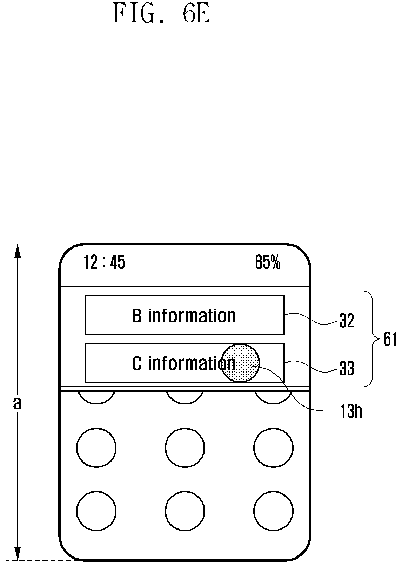

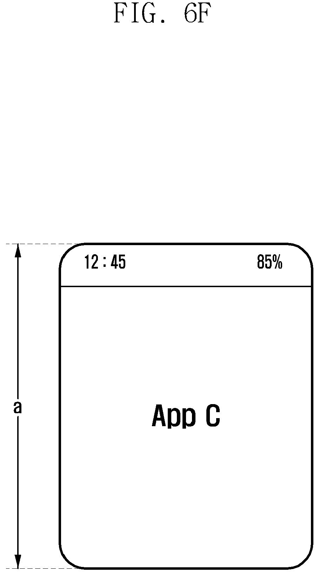

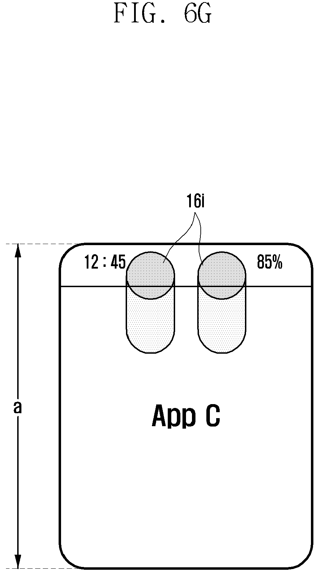

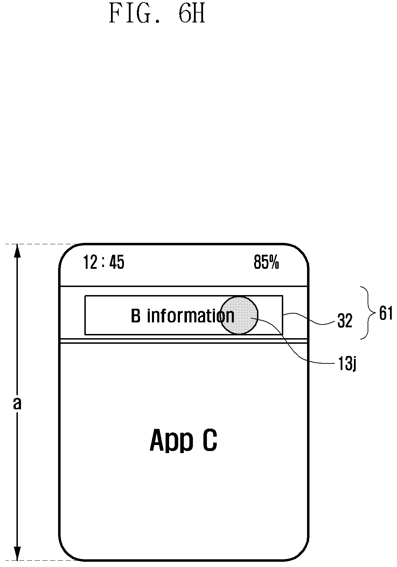

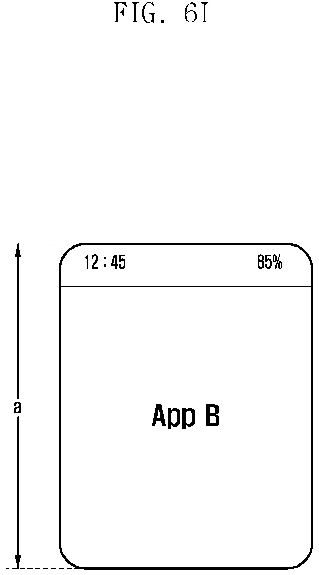

FIG. 6A, 6B, 6C, 6D, 6E, 6F, 6G, 6H, and 6I are diagrams illustrating a process for displaying and processing stored information according to a user input according to various embodiments.

Referring to FIG. 6A, an electronic device 101 on which a home screen 51 is displayed is illustrated. For example, the rollable display 160 may be in a state of being taken out to size a. The electronic device 101 may receive a fifth user input 15d on the home screen 51 and may perform an operation corresponding to the fifth user input 15d. As an example, the fifth user input 15d may include a single-touch flick (or swipe) gesture in the downward direction. The electronic device 101 may display the information reception box in response to the fifth user input 15d. For example, the fifth user input is an expression for distinguishing user inputs and is not limited to other aspects of the user inputs (e.g., importance or order).

Referring to FIG. 6B, an electronic device 101 on which a message reception icon is displayed is illustrated. As an example, the information reception box may include A information 31, B information 32, C information 33, D information 34, E information 35, and F information 36. The electronic device 101 may receive a user input on information included in the information reception box, and perform an operation corresponding to the received user input.

For example, the electronic device 101 may receive a first user input 11e on the B information 32 and the C information 33. For example, the first user input 11e may include a flick (or swipe) gesture in the left direction. The electronic device 101 may move the B information information 33 and the C information 33 to the information storage box and delete them from the information reception box in response to the first user input 11e. The electronic device 101 may receive a second user input 12e on the D information 34. As an example, the second user input 12e may include a flick (or swipe) gesture in the left direction. The electronic device 101 may delete the D information 34 from the information reception box in response to the second user input 12e.

Referring to FIG. 6C, an electronic device 101 on which an information storage box 61 is displayed is illustrated. As an example, the electronic device 101 may display the information storage box 61 together with the information reception box 62. The information storage box 61 may be disposed in a portion (e.g., the upper portion) of the information reception box 62. The screen on which the information reception box 62 is displayed, or the screen on which the information storage box 61 and the information reception box 62 are displayed together may be a general information display screen. As described in FIG. 6B, the B information 32 and the C information 33 may be moved to the information storage box 61, and the D information 34 may be deleted. The electronic device 101 may display the information storage box 61 including the B information 32 and the C information 33, together with the information reception box 62 including the A information 31, the E information 35, and the F information 36.

The electronic device 101 may receive a fourth user input 14f in a state where the information storage box 61 and the information reception box 62 are displayed (e.g., a state where a general information display screen is displayed). As an example, the fourth user input 14f may include a flick (or swipe) gesture in the upward direction. The electronic device 101 may switch the screen on which the information storage box 61 and the information reception box 62 are displayed to the home screen 51 according to the fourth user input 14f. For example, the fourth user input is an expression for distinguishing user inputs and is not limited to other aspects of the user inputs (e.g., importance or order).

Referring to FIG. 6D, an electronic device 101 on which a home screen 51 is displayed is illustrated.

The electronic device 101 may receive a sixth user input 16g on the home screen 51 and may perform an operation corresponding to the sixth user input 16g. As an example, the sixth user input 16g may include a two-touch flick (or swipe) gesture in the downward direction. The electronic device 101 may display the information storage box according to the sixth user input 16g. For example, the sixth user input is an expression for distinguishing user inputs and is not limited to other aspects of the user inputs (e.g., importance or order).

In other words, when the fifth user input 15d (e.g., a single-touch flick or swipe gesture in the downward direction) is received, the electronic device 101 may display a general information display screen (e.g., the screen on which the information reception box is displayed, or the screen on which the information storage box and the information reception box are displayed together) and when the sixth user input 16g (e.g., a two-touch flick or swipe gesture in the downward direction) is received, the electronic device 101 may display the information storage folder.

Referring to FIG. 6E, an electronic device 101 on which an information storage box 61 is displayed is illustrated. As described in FIG. 6B, the B information 32 and the C information 33 may be moved from the information reception box 62 to the information storage box 61. Accordingly, the electronic device 101 may display the information storage box 61 including the B information 32 and the C information 33. For example, the electronic device 101 may display a layer of the information storage box 61 above a layer of the home screen 51. The electronic device 101 may receive the third user input (e.g., tap or press) 13h on the C information 33.

Referring to FIGS. 6F and 6G, an electronic device 101 performing functions related to the C information 33 is illustrated. The electronic device 101 may receive a user input on information included in the information storage box 61, and perform an operation corresponding to the received user input. For example, when the third user input (e.g., tap or press) 13h is received on the C information 33, the electronic device 101 may execute an application related to the C information 33 and display data related to the C information. The electronic device 101 may receive a sixth user input 16i on the screen for performing functions related to the C information 33, and may display the information storage box according to the sixth user input 16i.

Referring to FIG. 6H, an electronic device 101 on which an information storage box 61 is displayed is illustrated. The electronic device 101 may execute functions related to the C information 33 included in the information storage box 61 according to user inputs. The electronic device 101 may delete the information of which the related function has been executed (or identified) from the information storage box 61. The electronic device 101 may delete the C information 33 from the information storage box 61 and display the B information 32. For example, the electronic device 101 may display a layer of the information storage box 61 above a layer of a screen on which data (or a function) related to the C information 33 is displayed. The electronic device 101 may receive a third user input (e.g., tap or press) 13j on the information B 32.

Referring to FIG. 6I, an electronic device 101 performing functions related to the B information 32 is illustrated. The electronic device 101 may receive a user input on information included in the information storage box 61, and perform an operation corresponding to the received user input. For example, when the third user input (e.g., tap or press) 13j is received on the B information 32, the electronic device 101 may execute an application related to the B information 32 and display data related to the B information.

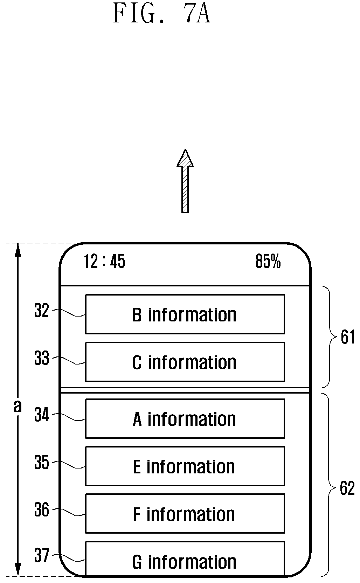

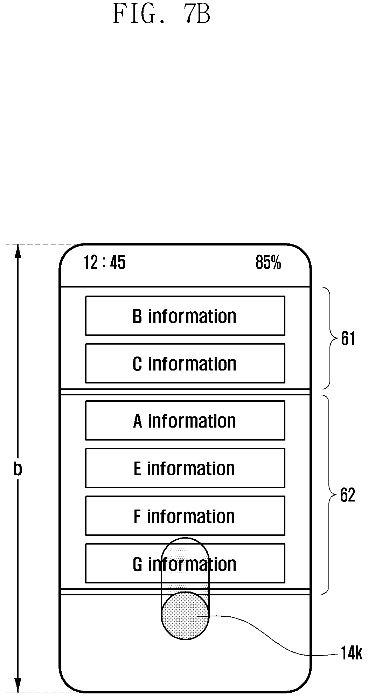

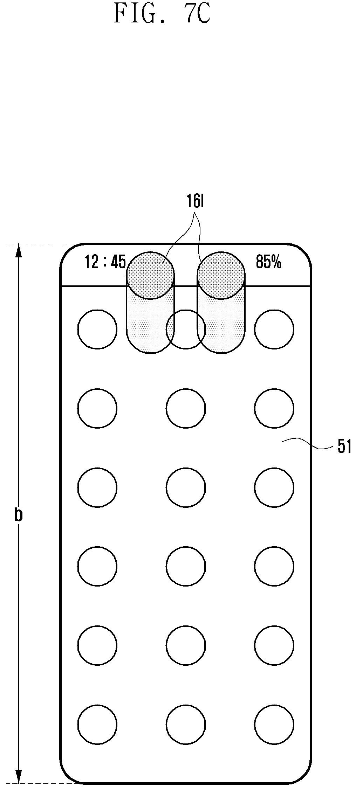

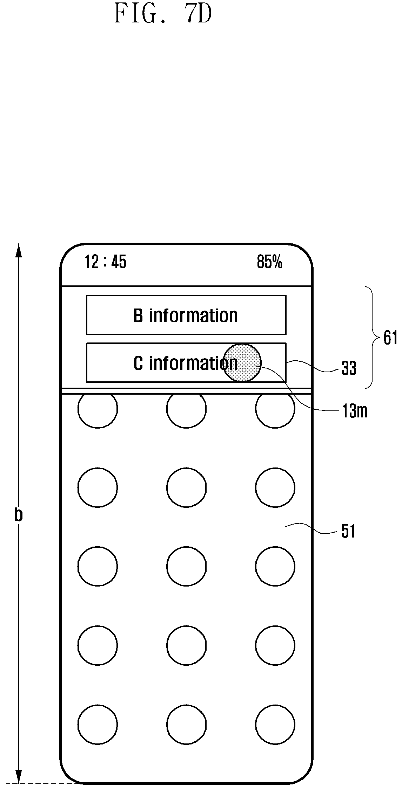

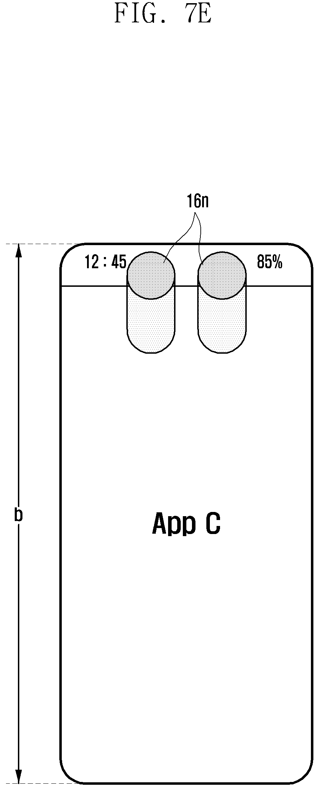

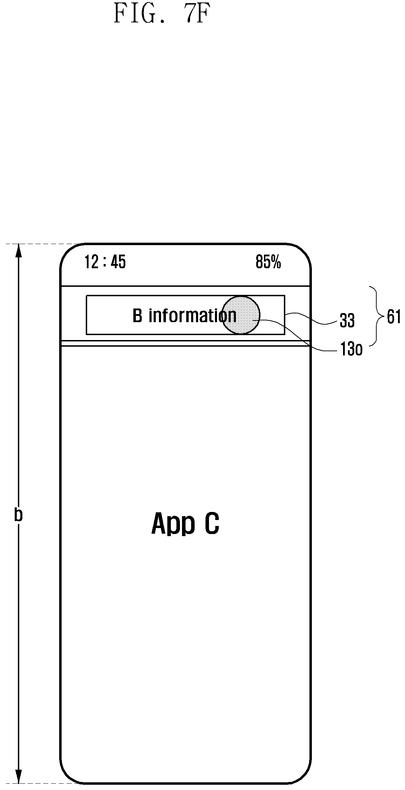

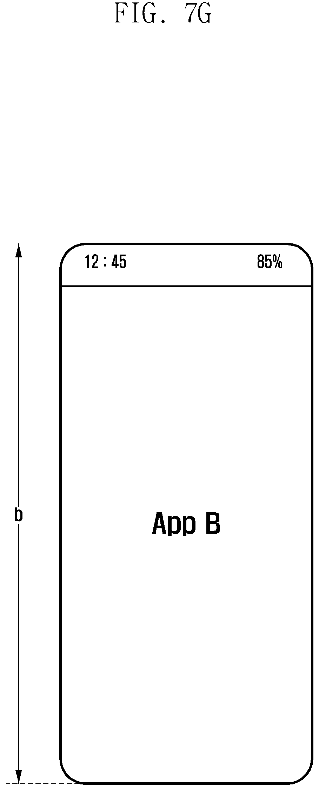

FIGS. 7A, 7B, 7C, 7D, 7E, 7F, and 7G are diagrams illustrating a method for displaying and processing stored information according to display areas of a rollable display and a user input according to various embodiments.

Referring to FIG. 7A, an electronic device 101 on which a general information display screen is displayed is illustrated. For example, the general information display screen may include a screen on which the information reception box 62 is displayed or a screen on which the information storage box 61 and the information reception box 62 are displayed together. The rollable display 160 may be in a state of being taken out to size a. For example, the information storage box 61 may include the B information 32 and the C information 33, and the information reception box 62 may include the A information 31, the E information 35, the F information 36, and the G information 37.

Referring to FIG. 7B, the rollable display 160, which has been taken out to size a, may be further taken out to size b. As the rollable display 160 is further taken out to size b, the size of the display area may be expanded from size a to size b. The electronic device 101 may display more information included in the information storage box 61 and/or the information reception box 62 according to the expansion of the display area size. The electronic device 101 may receive the fourth user input 14k on the general information display screen. As an example, the fourth user input 14k may include a flick (or swipe) gesture in the upward direction. The electronic device 101 may switch the general information display screen to the home screen 51 according to the fourth user input 14k.

Referring to FIG. 7C, an electronic device 101 on which a home screen 51 is displayed is illustrated. The electronic device 101 may receive a sixth user input 16l on the home screen 51 and may perform an operation corresponding to the sixth user input 16l. As an example, the sixth user input 16l may include a two-touch flick (or swipe) gesture in the downward direction.

Referring to FIG. 7D, an electronic device 101 on which an information storage box 61 is displayed is illustrated. As an example, the electronic device 101 may display the information storage box according to the sixth user input 16l. The information storage box 61 may be displayed as a separate layer from the home screen 51 layer. The information storage box 61 may include the B information 32 and the C information 33. The electronic device 101 may receive a third user input 13m on the C information 33. As an example, the third user input 13m may include a tap (or press) gesture for selecting the C information 33.

Referring to FIG. 7E, an electronic device 101 executing a function related to the selected information is illustrated. For example, when the C information 33 is selected, the electronic device 101 may execute an application related to the C information 33 and display (or perform a function of) data related to the C information 33 in the executed application. The electronic device 101 may receive a sixth user input 16n on the screen for performing functions related to the C information 33. As an example, the sixth user input 16n may include a two-touch flick (or swipe) gesture in the downward direction.

Referring to FIG. 7F, an electronic device 101 on which an information storage box 61 is displayed is illustrated. For example, as described with reference to FIG. 7E, the electronic device 101 may display the information storage box 61. The electronic device 101 may delete the information of which the related function has been executed (or identified) from the information storage box 61. The electronic device 101 may delete the C information 33 from the information storage box 61 and display the B information 32. For example, the electronic device 101 may display a layer of the information storage box 61 above a layer of a screen on which data (or a function) related to the C information 33 is displayed. The electronic device 101 may receive a third user input (e.g., tap or press) 13o on the information B 32.

Referring to FIG. 7G, an electronic device 101 performing functions related to the B information 32 is illustrated. For example, as described with reference to FIG. 7F, when the third user input (e.g., tap or press) 13o is received on the B information 32, the electronic device 101 may execute an application related to the B information 32 and display data related to the B information.

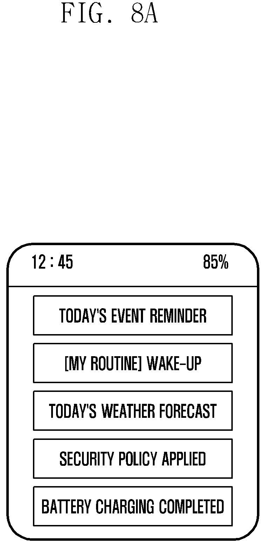

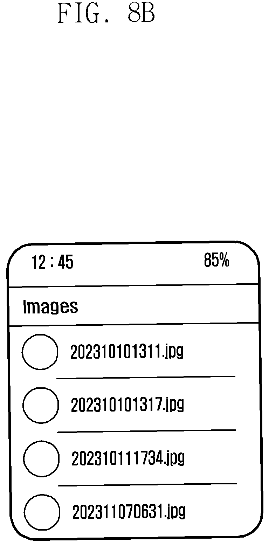

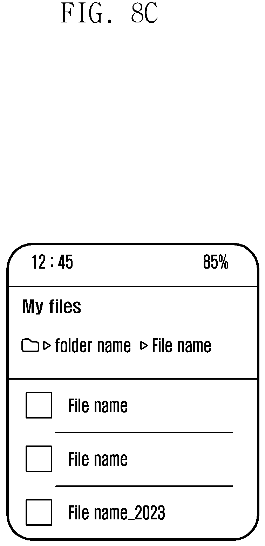

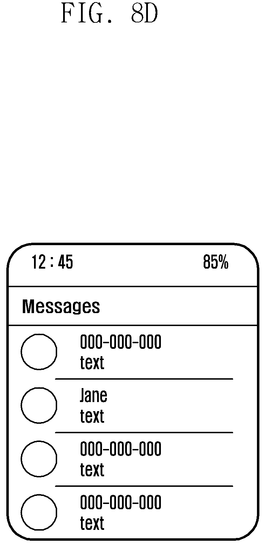

FIG. 8A, 8B, 8C, and 8D are diagrams illustrating an information reception box including various pieces of information according to various embodiments.

For example, the information may include a notification, an indicator, a message, a file, text, an image, and/or a content. The electronic device 101 may include multiple information reception boxes according to the type of information.

Referring to FIG. 8A, a notification information reception box including notification information is illustrated. For example, the electronic device 101 may receive a specific instruction related to a notification (e.g., message reception, information reception, or the like) from an external device through a communication interface (e.g., the communication module 190 in FIG. 1), and an application of the electronic device 101 may recognize the received instruction and generate a notification. As an example, the application of the electronic device 101 may generate a notification, based on information acquired from a sensor (e.g., the sensor module 176 in FIG. 1), a time change, and/or whether a specific event occurrence condition is satisfied. As an example, the notification information reception box may include today's event reminders, routine reminders, weather, news, security-related information, and/or battery-related information.

Referring to FIG. 8B, an image information reception box including image information is illustrated. The image information may include information of an image received from the outside and/or information of an image generated (or captured) in the electronic device 101. For example, the image information reception box may include an image name, the time of capturing the image, a generation time, a reception time, and/or tag information.

Referring to FIG. 8C, a file information reception box including file information is illustrated. The file information may include information on files received from the outside and/or information on files generated in the electronic device 101. As an example, the file information reception box may include information on a file name and/or a file type.

Referring to FIG. 8D, a message information reception box including message information is illustrated. The message information may include information on messages received from an external source and/or information on messages generated in the electronic device 101. For example, the message information reception box may include information regarding a sender, a sender's contact, a brief content of a message, and/or a reception (or generation) time.

In addition, the electronic device 101 may include an information reception box including information on an indicator, a text, and a content.

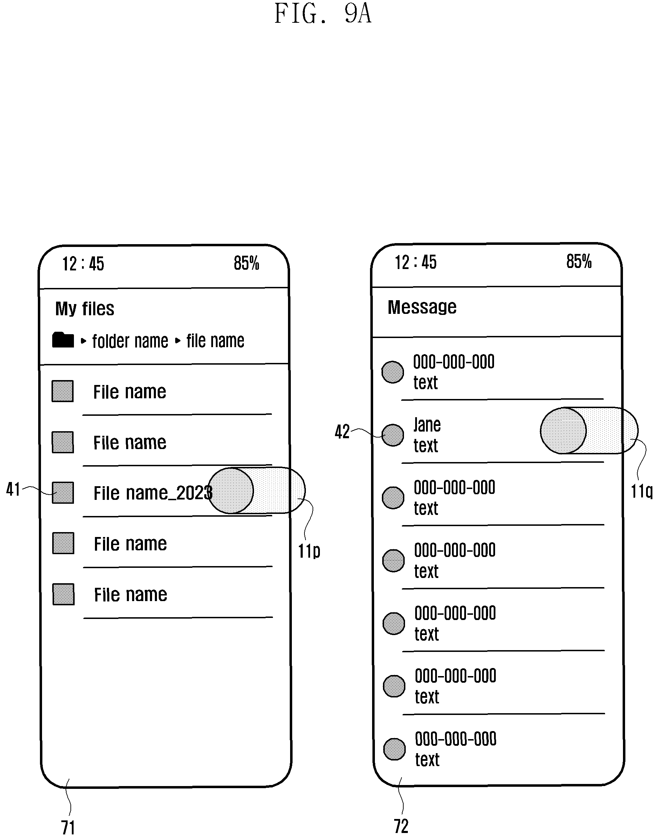

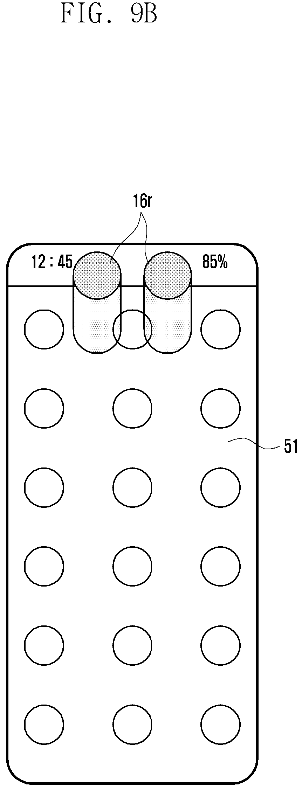

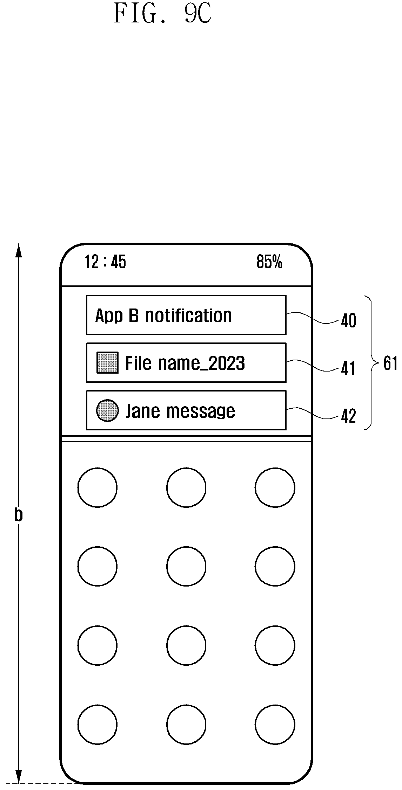

FIG. 9A, 9B, and 9C are diagrams illustrating a process for storing different types of information in an information storage box according to various embodiments.

Referring to FIG. 9A, information reception boxes 71 and 72 for various information are illustrated. The electronic device 101 may include a separate information reception box according to the type (or category) of information. The electronic device 101 may store information input from (or received from) the user, information generated (or received) by an internal component (e.g., the processor 120 in FIG. 3), and/or information received from an external device in a corresponding information reception box. For example, the information may include a notification, an indicator, a message, a file, text, an image, and/or a content. The electronic device 101 may store information on the received (or input or generated) notification in a notification information reception box, store information on the received (or input or generated) message in a message information reception box, and store information on the received (or input or generated) file in a file information reception box.

For example, as illustrated with reference to FIG. 9A, the file information reception box 71 may include information on at least one file, and the message information reception box 72 may include information on at least one message. When the electronic device 101 receives a first user input 11p on first information (e.g., File_name_2023) 41 included in the file information reception box 71, the electronic device 101 may move the first information 41 to the information storage box. For example, the first user input 11p may include a flick (or swipe) gesture in the left direction. For example, the electronic device 101 may delete the first information 41, which has been moved to the information storage box, from the file information reception box 71. According to an example, the electronic device 101 may maintain (or may not delete) the first information 41 included in the file information reception box 71. In this case, the electronic device 101 may copy the first information 41 included in the file information reception box 71 and may move the copied first information 41 to a file storage box.

Similarly, when the electronic device 101 receives a first user input 11q on second information (e.g., a message received from Jane) 42 included in the message information reception box 72, the electronic device 101 may move the second information 42 to the information storage box. For example, the electronic device 101 may delete the second information 42, which has been moved to the information storage box, from the message information reception box 72. According to an example, the electronic device 101 may maintain (or may not delete) the second information 42 included in the message information reception box 72. In this case, the electronic device 101 may copy the second information 42 included in the message information reception box 72 and may move the copied second information 42 to the file storage box.

Referring to FIG. 9B, an electronic device 101 on which a home screen 51 is displayed is illustrated.

The electronic device 101 may receive a sixth user input 16r on the home screen 51 and may perform an operation corresponding to the sixth user input 16r. As an example, the sixth user input 16r may include a two-touch flick (or swipe) gesture in the downward direction. The electronic device 101 may display the information storage box according to the sixth user input 16r.

Referring to FIG. 9C, an electronic device 101 on which an information storage box 61 is displayed is illustrated. As described in FIG. 9A, the electronic device 101 may move the first information (e.g., File_name_2023) 41 included in the file information reception box 71 and the second information (e.g., a message received from Jane) 42 included in the message information reception box 72 to the information storage box 61.

As illustrated in FIG. 9C, if the B information 40 is already included in the information storage box 61, the electronic device 101 may display the information storage box 61 including the B information 40, the first information 41, and the second information 42. For example, the electronic device 101 may display a layer of the information storage box 61 above a layer of the home screen 51. As an example, when the electronic device 101 receives a user input for selecting the first information 41, the electronic device 101 may execute an application (e.g., a document application) related to the first information 41 and display data of the first information 41. As an example, when the electronic device 101 receives a user input for selecting the second information 42, the electronic device 101 may execute an application (e.g., a messenger application) related to the second information 42 and display data of the second information 42.

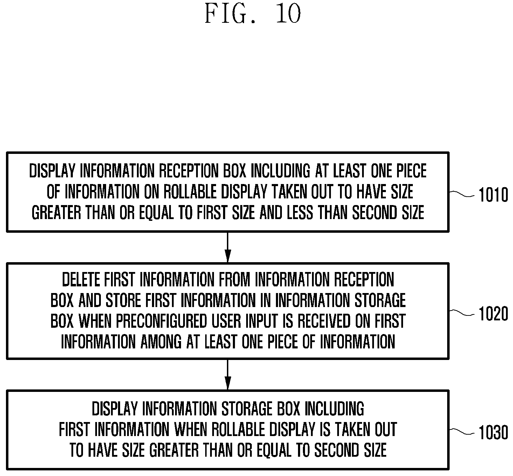

FIG. 10 is a flowchart illustrating a method for storing information according to various embodiments.

In the following embodiment, respective operations may be sequentially performed, but are not necessarily sequentially performed. For example, the sequential position of each operation may be changed, or at least two operations may be performed in parallel.

According to an embodiment, it may be understood that operations 1010 to 1030 are performed by a processor (e.g., the processor 120 in FIG. 3) of the electronic device (e.g., the electronic device 101 in FIG. 3).

Referring to FIG. 10, the electronic device 101 may display, on the rollable display 160, the information reception box including at least one piece of information (1010). The rollable display 160 may be inserted into or taken out of the electronic device 101. For example, the rollable display 160 may be taken out to have a size greater than or equal to the first size but less than the second size. The first size may be a preconfigured size, and the second size may be a size greater than the first size. As an example, the second size may include a size in which the rollable display 160 is taken out to its maximum. The electronic device 101 may display the information reception box on the rollable display 160 that has been taken out to have a size greater than or equal to the first size but less than the second size. For example, the information reception box may be an area for storing the generated (or received) information or a UI for displaying same. The information reception box may be generated for each type of information.

When the electronic device 101 receives a preconfigured user input (e.g., a flick or swipe gesture in the right direction) on the first information among the at least one piece of information included in the information reception box, the electronic device 101 may delete the first information from the information reception box and store same in the information storage box (1030). For example, the first information may include a notification, an indicator, a message, a file, a text, an image, and/or a content. The information storage box may be an area or a UI that stores or displays information that has been moved from the information reception box. There may be one information storage box, and the information storage box may store selected information regardless of the type of information.

When the rollable display 160 is taken out to have a size greater than or equal to the second size, the electronic device 101 may display the information storage box including the first information (1030). As an example, when the rollable display 160 is taken out to have a size greater than or equal to the second size, the electronic device 101 may switch a screen on which the information reception box is displayed to a screen on which the information storage box is displayed. In addition, when the rollable display 160, which has been taken out to have a size equal to or larger than the second size, is inserted to have a size equal to or larger than the first size and smaller than the second size, the electronic device 101 may switch the screen on which the information storage box is displayed to the screen on which the information reception box is displayed. When the second information is received in a state where the information storage box is displayed, the electronic device 101 may display the second information together with the first information in the information storage box. When the rollable display 160 is inserted to have a size greater than the first size and less than the second size in a state where the second information is unidentified, the electronic device 101 may delete the second information from the information storage box and move same to the information reception box. As another example, when the rollable display 160 is taken out have a size greater than or equal to the second size, the electronic device 101 may display the information reception box and the information storage box together.

For example, when the preconfigured first user input is received on the first information included in the information storage box, the electronic device 101 may delete the first information from the information storage box and move same to the information reception box. When the first information included in the information storage box is selected, the electronic device 101 may execute a function related to the first information. When a preconfigured second user input (e.g., a flick or swipe gesture in the upward direction) is received in a state where the information storage box and/or information reception box is displayed, a displayed screen may be switched to the home screen. When a preconfigured third user input (e.g., a single-touch flick or swipe gesture in the downward direction) is received in a state where the home screen is displayed, the electronic device 101 may display the information reception box (or the general information display screen). When a preconfigured fourth user input (e.g., a two-touch flick or swipe gesture in the downward direction) is received in a state where the home screen is displayed, the electronic device 101 may display the information storage box.

As an example, the electronic device 101 may include a rollable display 160 that is inserted into or taken out of the electronic device 101, a processor 120, and a memory 130 that stores instructions executed by the processor 120. The instructions stored in the memory 130 may cause the electronic device 101 to perform an operation of displaying an information reception box 62 including at least one piece of information on the rollable display 160, which is taken out to have a size greater than or equal to a first size and less than a second size. The instructions may cause the electronic device 101 to perform, when a preconfigured user input is received on first information among the at least one piece of information, an operation of deleting the first information from the information reception box 62 and storing same in the information storage box 61. The instruction may cause the electronic device 101 to perform, in case that the rollable display 160 is taken out to have a size greater than or equal to the second size, an operation of displaying an information storage box 61 including the first information.

As an example, the instructions may cause the electronic device 101 to perform, when a first user input is received on the first information included in the information storage box 61, an operation of moving the first information to the information reception box 62 and deleting the first information from the information storage box 61. The first user input may include a flick or swipe input in the right direction with respect to the first information included in the information storage box 61.

For example, the instruction may cause the electronic device 101 to perform, when a second user input for selecting the first information included in the information storage box 61 is received, an operation of executing a function related to the first information. The second user input may include a tap or press input for the first information included in the information storage box.

As an example, the instructions may cause the electronic device 101 to perform an operation of displaying the information storage box on at least a portion of the rollable display 160, based on an operation in which the rollable display 160 is taken out to have a size greater than or equal to the second size. The instructions may cause the electronic device 101 to perform an operation of displaying the information reception box 62 on at least a portion of the rollable display 160, based on an operation in which the rollable display 160 is taken out to have a size greater than or equal to the first size and less than the second size.

For example, the instructions may cause the electronic device 101 to perform, when second information is received in a state where the information storage box 61 is displayed, an operation of displaying the second information together with the first information in the information storage box 61. The instructions may cause the electronic device 101 to perform, based on an operation in which the rollable display 160 is inserted to have a size greater than or equal to the first size and less than the second size in a state where the second information is unidentified, an operation of moving the second information to the information reception box 62 and deleting the second information from the information storage box 61.

For example, the instructions may cause the electronic device 101 to perform, based on an operation in which the rollable display 160 is taken out to have a size greater than or equal to the second size, an operation of displaying the information storage box 61 together with the information reception box 62.

As an example, the instruction may cause the electronic device 101 to perform, when a third user input is received in a state which at least one of the information storage box 61 and the information receiver 62 is displayed, an operation of displaying a home screen 51 on at least a portion of the rollable display 160. The third user input may include a flick or swipe input in the upward direction received on a lower end area of the rollable display 160.

As an example, the instructions may cause the electronic device 101 to, when a fourth user input is received in a state where the home screen 51 is displayed, display the information reception box 62. The instructions may cause the electronic device 101 to perform, in case that a preconfigured fifth user input is received in a state where the home screen 51 is displayed, an operation of displaying the information storage box 61. The fourth user input may include a single-touch flick or swipe input in the downward direction received on an upper end area of the rollable display 160, and the fifth user input may include a two-touch flick or swipe input in the downward direction received on the upper end area of the rollable display 160.

As an example, the first information may include at least one of a notification, an indicator, a message, a file, text, an image, and a content generated by an application.

For example, an information storage method of an electronic device 101 including a rollable display 160 that is inserted into or taken out of the electronic device 101 may include an operation of displaying, on the rollable display 160 that has been taken out to have a size greater than or equal to a first size and less than a second size, an information reception box 62 including at least one piece of information. The method may include, in case that a preconfigured user input is received on first information among the at least one piece of information, an operation of deleting the first information from the information reception box 62 and storing the first information in the information storage box 61. The method may include, in case that the rollable display 160 is taken out to have a size greater than or equal to the second size, an operation of displaying an information storage box 61 including the first information.

As an example, the method may include, when a first user input is received on the first information included in the information storage box 61, an operation of deleting the first information from the information storage box 61 and moving the first information to the information reception box 62. The first user input may include a flick or swipe input in the right direction with respect to the first information included in the information storage box 61.

For example, the method may include, when a second user input for selecting the first information included in the information storage box 61 is received, an operation of executing a function related to the first information. The second user input may include a tap or press input for the first information included in the information storage box 61.

As an example, the operation for displaying the information storage box 61 may include an operation of displaying the information storage box 61 on at least a portion of the rollable display 160, based on an operation in which the rollable display 160 is taken out to have a size greater than or equal to the second size. The method may further include, based on an operation in which the rollable display 160 taken out to have a size greater than or equal to the second size is inserted to have a size greater than or equal to the first size and less than the second size, an operation of displaying the information storage 61 on at least a portion of the rollable display 160.

As an example, the method may include, in case that second information is received in a state where the information storage box 61 is displayed, an operation of displaying the second information together with the first information in the information storage box 61. The method may include, based on an operation in which the rollable display 160 is inserted to have a size greater than or equal to the first size and less than the second size in a state where the second information is unidentified, an operation of deleting the second information from the information storage box 61 and moving the second information to the information reception box 62.

As an example, the operation of displaying the information storage box 61 may include, based on the operation in which the rollable display 160 is taken out to have a size greater than or equal to the second size, an operation of displaying the information storage box 61 together with the information reception box 62.

As an example, the method may include, in case that a preconfigured third user input is received in a state where at least one of the information storage box 61 and the information reception box 62 is displayed, an operation of displaying a home screen 51 on at least a portion of the rollable display 160. The third user input may include a flick or swipe input in the upward direction received on a lower end area of the rollable display 160.

As an example, the method may include, in case that a fourth user input is received in a state where the home screen 51 is displayed, an operation of displaying the information reception box 62. As an example, the method may include, in case that a preconfigured fifth user input is received in a state where the home screen 51 is displayed, an operation of displaying the information storage box 61. The fourth user input may include a single-touch flick or swipe input in the downward direction received on an upper end area of the rollable display 160, and the fifth user input may include a two-touch flick or swipe input in the downward direction received on the upper end area of the rollable display 160.

As an example, the first information may include at least one of a notification, an indicator, a message, a file, text, an image, and a content generated by an application.

As an example, a non-transitory computer-readable storage medium storing a program for performing an information storage method of an electronic device 101 including a rollable display 160 that is inserted into or taken out of the electronic device 101 may perform an operation of displaying an information reception box 62 including at least one piece of information on the rollable display 160 taken out to have a size greater than or equal to a first size and less than a second size. The medium may preform, in case that a preconfigured user input is received on first information among the at least one piece of information, an operation of deleting the first information from the information reception box 62 and storing the first information in the information storage box 61. The medium may preform, in case that the rollable display 160 is taken out to have a size greater than or equal to the second size, an operation of displaying an information storage box 61 including the first information.

As an example, the medium may preform, when a first user input is received on the first information included in the information storage box 61, an operation of deleting the first information from the information storage box 61 and moving the first information to the information reception box 62. The first user input may include a flick or swipe input in the right direction with respect to the first information included in the information storage box 61.

It should be appreciated that various examples of the disclosure and the terms used therein are not intended to limit the technological features set forth herein to particular examples and include various changes, equivalents, or replacements for a corresponding example. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it denotes that the element may be coupled with the other element directly (e.g., wiredly), wirelessly, or via a third element.

As used in connection with various examples of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an example, the module may be implemented in a form of an application-specific integrated circuit (ASIC).

Various examples as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an example, a method according to various examples of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various examples, each component (e.g., a module or a program) of the above-described components may include a single entity or multiple entities, and some of the multiple entities may be separately disposed in different components. According to various examples, one or more of the above-described components may be omitted, or one or more other components may be added. Alternatively or additionally, a plurality of components (e.g., modules or programs) may be integrated into a single component. In such a case, according to various examples, the integrated component may still perform one or more functions of each of the plurality of components in the same or similar manner as they are performed by a corresponding one of the plurality of components before the integration. According to various examples, operations performed by the module, the program, or another component may be carried out sequentially, in parallel, repeatedly, or heuristically, or one or more of the operations may be executed in a different order or omitted, or one or more other operations may be added.

The effects of the disclosure are not limited to the above-mentioned effects, and other effects not mentioned herein will be clearly understood by those skilled in the art from the above descriptions.

## Claims

1. An electronic device (101) comprising:
a rollable display (120) that is inserted into or taken out of the electronic device (101);
a processor (120); and
a memory (130) configured to store an instruction executed by the processor (120),
wherein the instruction stored in the memory (130) causes the electronic device (101) to:
display an information reception box (62) comprising at least one piece of information on the rollable display (160) taken out to have a size greater than or equal to a first size and less than a second size;
when a preconfigured user input is received on first information among the at least one piece of information, delete the first information from the information reception box (62) and store the first information in an information storage box (61); and
when the rollable display (160) is taken out to have a size greater than or equal to the second size, display the information storage box (61) comprising the first information.

2. The electronic device of claim 1, wherein the instruction causes the electronic device (101) to, when a first user input is received on the first information included in the information storage box (61), move the first information to the information reception box (62) and delete the first information from the information storage box (61), and
wherein the first user input comprises a flick or swipe input in a right direction with respect to the first information included in the information storage box (61).

3. The electronic device of claim 1, wherein the instruction causes the electronic device (101) to, when a second user input for selecting the first information included in the information storage box (61) is received, execute a function related to the first information, and
wherein the second user input comprises a tap or press input for the first information included in the information storage box.

4. The electronic device of claim 1, wherein the instruction causes the electronic device (101) to:
based on the rollable display (160) being taken out to have a size greater than or equal to the second size, display the information storage box on at least a portion of the rollable display (160); and
based on the rollable display (160) being taken out to have a size greater than or equal to the first size and less than the second size, display the information reception box (62) on at least a portion of the rollable display (160).

5. The electronic device of claim 1, wherein the instruction causes the electronic device (101) to:
when second information is received in a state where the information storage box (61) is displayed, display the second information together with the first information in the information storage box (61); and
based on the rollable display (160) being inserted to have a size greater than or equal to the first size and less than the second size in a state where the second information is unidentified, move the second information to the information reception box (62) and delete the second information from the information storage box (61).

6. The electronic device of claim 1, wherein the instruction causes the electronic device (101) to, based on the rollable display (160) being taken out to have a size greater than or equal to the second size, display the information storage box (61) together with the information reception box (62).

7. The electronic device of claim 1, wherein the instruction causes the electronic device (101) to, when a third user input is received in a state where at least one of the information storage box (61) and the information reception box (62) is displayed, display a home screen (51) on at least a portion of the rollable display (160), and
wherein the third user input comprises a flick or swipe input in an upward direction received on a lower end area of the rollable display (160).

8. The electronic device of claim 7, wherein the instruction causes the electronic device (101) to display the information reception box (62) when a fourth user input is received in a state where the home screen (51) is displayed, and display the information storage box (61) when a fifth user input is received in a state where the home screen (51) is displayed,
wherein the fourth user input comprises a single-touch flick or swipe input in a downward direction received on an upper end area of the rollable display (160), and
wherein the fifth user input comprises a two-touch flick or swipe input in the downward direction received on the upper end area of the rollable display (160).

9. The electronic device of claim 1, wherein the first information comprises at least one of a notification, an indicator, a message, a file, text, an image, and a content generated by an application.

10. A method for storing information of an electronic device (101) comprising a rollable display (160) that is inserted into or taken out of the electronic device (101), the method comprising:
displaying an information reception box (62) comprising at least one piece of information on the rollable display (160) taken out to have a size greater than or equal to a first size and less than a second size;
when a preconfigured user input is received on first information among the at least one piece of information, deleting the first information from the information reception box (62) and storing the first information in an information storage box (61); and
when the rollable display (160) is taken out to have a size greater than or equal to the second size, displaying the information storage box (61) comprising the first information.

11. The method of claim 10, further comprising, when a first user input is received on the first information included in the information storage box (61), deleting the first information from the information storage box (61) and moving the first information to the information reception box (62),
wherein the first user input comprises a flick or swipe input in a right direction with respect to the first information included in the information storage box (61).

12. The method of claim 10, further comprising, when a second user input for selecting the first information included in the information storage box (61) is received, executing a function related to the first information,
wherein the second user input comprises a tap or press input for the first information included in the information storage box (61).

13. The method of claim 10, wherein the displaying of the information storage box (61) further comprises:
based on the rollable display (160) being taken out to have a size greater than or equal to the second size, displaying the information storage box (61) on at least a portion of the rollable display (160); and
based on the rollable display (160) being taken out to have a size greater than or equal to the first size and less than the second size, displaying the information reception box (62) on at least a portion of the rollable display (160).

14. The method of claim 10, further comprising:
when second information is received in a state where the information storage box (61) is displayed, displaying the second information together with the first information in the information storage box (61); and
based on the rollable display (160) being inserted to have a size greater than or equal to the first size and less than the second size in a state where the second information is unidentified, deleting the second information from the information storage box (61) and moving the second information to the information reception box (62).

15. The method of claim 10, wherein the displaying of the information storage box (61) comprises, based on the rollable display (160) being taken out to have a size greater than or equal to the second size, displaying the information storage box (61) together with the information reception box (62).
